# EUROPÄISCHE PATENTANMELDUNG

(11) **EP 4 509 348 A1**
(43) Veröffentlichungstag der Anmeldung: **19.02.2025**
(21) Anmeldenummer: 24000092.7
(22) Anmeldetag: 15.07.2024
(51) Int. Cl.: B60L 53/16, H01R 13/453

(54) **VERSCHLIESSEINRICHTUNG FÜR EINE ELEKTRISCHE LADEDOSE**

(30) Priorität: 17.08.2023 DE 102023122046
(71) Anmelder: HARTING Automotive GmbH, 32339 Espelkamp (DE)
(72) Erfinder: Beimdieck, Carsten, DE-49479 Ibbenbüren (DE); Niehaus, Mareike, DE-49401 Damme (DE)

(57) **Zusammenfassung**

Um eine möglichst einfache und robuste und zudem platzsparende Bauform für eine komfortabel zu bedienenden Verschließeinrichtung für eine elektrische Ladedose anzugeben, die vorzugsweise möglichst wenig Bauteile benötigt, wird eine Anordnung vorgeschlagen, die Folgendes aufweist:
- Ein zumindest zweiteiliges Gehäuse, aufweisend ein anschlussseitiges Rahmenteil (11) und eine steckseitige Abdeckung (12) sowie eine Stecköffnung (18);
- genau zwei zwischen dem Rahmenteil (11) und der Abdeckung (12) senkrecht zur Steckrichtung beweglich gehaltene Blenden (14, 14') zur Freigabe und zum zumindest teilweisen Verschließen der Stecköffnung;
- genau einen Schieber (15) zum federbeaufschlagten Auseinanderbewegen der beiden Blenden (14, 14') in ihre geöffnete Position, in der sie die Stecköffnung (18) freigeben
- ein oder mehrere Zugfedern (32), zur Federbeaufschlagung und damit zur Erzeugung einer Rückstellkraft zum automatischen rückstellenden Zusammenbewegen der beiden Blenden (14, 14') in ihre Ausgangslage;
- einen mittels des Ladesteckers im Steckvorgang in einer Betätigungsrichtung betätigbaren Betätiger (13) zum Ver- und Entriegeln der beiden Blenden (14, 14') in ihrer Ausgangslage.

## Beschreibung

Die Erfindung geht aus von einer Verschließeinrichtung für eine elektrische Ladedose gemäß der Gattung des unabhängigen Anspruchs 1.

Des Weiteren geht die Erfindung aus von einem Ladesystem, aufweisend das Verschließsystem gemäß Anspruch 1 sowie die Ladedose.

Außerdem geht die Erfindung aus von einem Stecksystem, aufweisend das Ladesystem gemäß Anspruch 14 und einen Ladestecker, insbesondere einem Autoladestecker.

Ferner geht die Erfindung aus von einer Wallbox, aufweisend ein Wallbox-Gehäuse sowie eine darin oder daran angeordnete Ladedose, wobei das Wallbox-Gehäuse eine Montagevorrichtung besitzt, an welcher die Verschließeinrichtung gemäß Anspruch 1 anbringbar ist.

Weiterhin geht die Erfindung aus von einem Verfahren zur Betätigung der Verschließeinrichtung gemäß Anspruch 1.

Eine solche Ladedose kann beispielswiese als Buchsensteckverbinder ausgeführt und z. B. zum Laden eines E-Autos vorgesehen sein. Die Ladedose ist bevorzugt in und/oder an dem Gehäuse einer sogenannten Wallbox angeordnet und ist somit Bestandteil dieser Wallbox. Die Verschließeinrichtung kann dann an der Ladedose oder an einem Wallbox-Gehäuse, d. h. an einem Gehäuse der Wallbox, angebracht oder optional daran montierbar sein und dadurch auch zu einem Bestandteil dieser Wallbox werden. Die Wallbox kann ihrerseits z. B. in einer Garage an deren Garagenwand von innen angebracht sein oder zumindest dafür vorgesehen sein, von Innen an der Garagenwand angebracht zu werden. Alternativ kann die Verschließeinrichtung aber auch an einer Ladesäule im Freien angebracht werden.

Derartige Verschließeinrichtungen werden benötigt, um elektrische Ladedosen der vorgenannten Art steckseitig zu verschließen, beispielsweise gegen das Eindringen von Staub und/oder Feuchtigkeit in den Steckbereich der jeweiligen Ladedose und/oder dienen als - ggf. zusätzlicher - Berührschutz. Letzterer dient zur Vermeidung eines ungewollten elektrischen Kontaktes, z. B. durch einen Finger oder einen länglichen, elektrisch leitenden Gegenstand wie einen Schraubendreher oder einen Nagel, eine Schraube o. ä., wobei dieser elektrische Kontakt schlimmstenfalls mit einer Gefahr für Leib und Leben einhergeht.

### Stand der Technik

Die Druckschrift DE 102021107290 A1 offenbart eine Verschließeinrichtung mit zumindest einem Abdeckelement zur Abdeckung zumindest eines elektrischen Kontaktelements eines Steckverbinders in einer Steckrichtung. Die Verschließeinrichtung weist ein Gehäuse mit einer Gehäuseöffnung zur Betätigung der Verschließeinrichtung durch einen in der Steckrichtung geführten Steckabschnitt eines Gegensteckers auf. In dem Gehäuse ist ein Koppelelement bewegbar, vorzugsweise rotatorisch bewegbar, gelagert und ist mit dem zumindest einen Abdeckelement zur Betätigung des zumindest einen Abdeckelements zwischen einer Verschlussposition und einer Öffnungsposition gekoppelt. In dem Gehäuse ist zumindest ein Freigabeelement translatorisch bewegbar gelagert und ist konfiguriert, das Koppelelement freizugeben oder zu sperren. In dem Gehäuse ist weiterhin zumindest ein Stellelement translatorisch bewegbar gelagert und ist konfiguriert, das Koppelelement nach der Freigabe zu betätigen, um das zumindest eine Abdeckelement von der Verschlussposition in die Öffnungsposition zu bewegen.

Nachteilig bei diesem Stand der Technik ist, dass die bekannte Verschließeinrichtung in Steckrichtung unerwünscht viel Platz beansprucht.

Insbesondere in beengten Umgebungen wie kleineren Garagen, etc. besteht ein besonderes Bedürfnis nach möglichst flach aufbauenden Wallboxen. Außerdem bestehen solche Verschließeinrichtungen aus unerwünscht vielen Teilen, was eine erhöhte Fehleranfälligkeit zur Folge hat.

Im Stand der Technik besteht somit der Nachteil, dass bekannte Lösungen unerwünscht komplex und aufwändig aufgebaut sind, einen zu hohen Platzbedarf besitzen, aus unerwünscht vielen Teilen bestehen und somit im Betrieb besonders fehleranfällig und der Herstellung aufwändig und kostenintensiv sind.

Weiterhin besteht im Stand der Technik ein Bedürfnis nach einer modularen Bauform einer Wallbox, aufweisend eine Ladedose, wobei die Bauform eine Option auf eine entsprechende Nachrüstbarkeit durch eine automatischen Verschließeinrichtung gestattet. Insbesondere besteht dieses Bedürfnis für den Export der Wallbox in Länder mit besonders strengen Sicherheitsvorschriften.

### Aufgabenstellung

Die Aufgabe der Erfindung besteht darin, eine möglichst einfache und robuste und zudem platzsparende Bauform für eine komfortabel zu bedienenden Verschließeinrichtung für eine elektrische Ladedose anzugeben, wobei die Verschließeinrichtung vorzugsweise möglichst wenig Bauteile benötigt. Dabei soll die komfortable Bedienung es insbesondere ermöglichen, die Verschließeinrichtung mit geringem Aufwand beim Einführen eines Ladesteckers, beispielswiese eines Autoladesteckers, mittels des Ladesteckers zusammen mit dem Steckvorgang in einem einzigen Bewegungsablauf zu betätigen. Insbesondere soll eine existierende Wallbox, welche noch keine automatische Verschließeinrichtung besitzt, durch die besagte Verschließeinrichtung ergänzbar/ nachrüstbar sein.

Die Aufgabe wird durch den Gegenstand der unabhängigen Ansprüche gelöst.

Eine Verschließeinrichtung für eine elektrische Ladedose weist die folgenden Bauteile auf:
- ein zumindest zweiteiliges Gehäuse, aufweisend ein anschlussseitiges Rahmenteil und eine steckseitige Abdeckung sowie eine durch das Rahmenteil und die Abdeckung verlaufende Stecköffnung zum teilweisen Hindurchstecken eines Ladesteckers in einer Steckrichtung zum steckenden Verbinden des Ladesteckers mit der Ladedose;
- genau zwei zwischen dem Rahmenteil und der Abdeckung senkrecht zur Steckrichtung beweglich gehaltene Blenden zur Freigabe und zum zumindest teilweisen Verschließen der Stecköffnung;
- genau einen Schieber zum federbeaufschlagten Auseinanderbewegen der beiden Blenden aus ihrer Ausgangslage, in der sie die Stecköffnung zumindest teilweise verschließen, in ihre geöffnete Position, in der sie die Stecköffnung freigeben
- ein oder mehrere Zugfedern, durch welche die Verschließeinrichtung zur vorgenannten Federbeaufschlagung und damit zur Erzeugung einer Rückstellkraft zum automatischen rückstellenden Zusammenbewegen der beiden Blenden in ihre Ausgangslage eingerichtet ist;
- einen mittels des Ladesteckers im Steckvorgang in einer Betätigungsrichtung betätigbaren Betätiger zum Ver- und Entriegeln der beiden Blenden in ihrer Ausgangslage.

Ein Verfahren zur Betätigung der Verschließeinrichtung weist die folgenden Schritte auf:
- Heranführen eines Ladesteckers, insbesondere eines Autoladesteckers, in Steckrichtung an die Verschließeinrichtung, hinter der - in Steckrichtung betrachtet - eine Ladedose angeordnet ist, und dabei
- federbeaufschlagtes Betätigen des Betätigers in Steckrichtung mittels des Ladesteckers;
- Halten des Betätigers in seiner betätigten Position und gleichzeitiges beginnen mit dem Verschieben des Schiebers mittels des Ladesteckers senkrecht zur Steckrichtung, dadurch
- teilweises, bereits federbeaufschlagtes Auseinanderbewegen der beiden Blenden zumindest aus einer Reichweite des Betätigers heraus, so dass die Blenden nicht mehr durch den Betätiger verrastbar sind;
- Zurückschnellen des Betätigers und gleichzeitiges weiteres federbeaufschlagtes Auseinanderbewegen der beiden Blenden in ihre geöffnete Position zur Freigabe der Stecköffnung;
- teilweises Hindurchführen des Ladesteckers durch die Stecköffnung und steckendes Verbinden des Ladesteckers mit der Ladedose:
- nach erfolgtem Ladevorgang Ziehen des Ladesteckers aus der Ladedose und aus der Stecköffnung und Entfernen des Ladesteckers von der Verschließeinrichtung;
- automatisches zumindest teilweises Verschließen der Stecköffnung durch die beiden Blenden durch die Rückstellkraft des einen oder der mehreren Zugfedern;
- Verrasten der Blenden in ihrer Ausgangslage am Betätiger.

Ein Ladesystem besitzt die elektrische Ladedose sowie die an der Ladedose angeordnete Verschließeinrichtung, durch deren Stecköffnung ein Ladestecker teilweise hindurchführbar und mit der Ladedose steckbar ist.

Ein Stecksystem besitzt ein solches Ladesystem sowie einen Ladestecker, insbesondere einen Autoladestecker, d. h. einen Ladestecker für Elektroautos. >

Unter einem Ladestecker ist ein üblicherweise kabelgebundender Steckverbinder zu verstehen, der zum Laden von wiederaufladbaren Batterien ("Akkus") dient. Dem Fachmann sind solche Ladestecker wohlbekannt. Eine wesentliche Bauform stellt der bereits landläufig verwendete Autoladestecker dar. Er dient zu Laden der Batterien von Elektroautos, besitzt einen Griff sowie einen dazu in einem stumpfen Winkel abstehenden Steckbereich ("Revolverform"). Der grundsätzliche Aufbau von Autoladesteckern ist vielfach genormt und/oder zumindest durch herstellerübergreifende, gemeinsame Konventionen festgelegt und ist somit als dem Fachmann bekannt vorauszusetzen.

Eine Wallbox besitzt ein Wallbox-Gehäuse sowie eine darin oder daran angeordnete Ladedose wobei das Wallbox-Gehäuse eine Montagevorrichtung besitzt, an welcher wahlweise sowohl eine Verschließeinrichtung Verschließeinrichtung der vorgenannten Art als auch - alternativ dazu - eine einfache Verschlussklappe montierbar ist. Die Verschließeinrichtung und die Verschlussklappe sind somit wahlweise gegeneinander austauschbar, die Wahl der Verschließeinrichtung beispielsweise für den Export in Länder oder Regionen, in denen erhöhte Sicherheitsvorschriften bezüglich des automatischen Verschließens der Wallbox existieren.

Ein besonderer Vorteil der Verschließeinrichtung besteht darin, dass sie "automatisch" funktioniert, d. h. durch Herausziehen des Ladesteckers aus der Ladedose automatisch verschlossen werden kann. Weiterhin kann "automatisch" zusätzlich auch bedeuten, dass mittels des mit der Ladedose zu steckenden Ladesteckers zusammen mit dem Steckvorgang in einer durchgehenden Bewegung auch "automatisch" geöffnet werden kann, da die Steckbewegung schließlich auf jeden Fall händisch durchgeführt wird.

Ein weiterer Vorteil der Verschließeinrichtung besteht darin, dass diese Verschließeinrichtung in Steckrichtung nur wenig Platz beansprucht. Insbesondere für beengten Umgebungen wie kleineren Garagen, etc. kann so eine äußerst flach aufbauenden, Wallbox ermöglicht werden.

Ein weiterer Vorteil besteht darin, dass die Verschließeinrichtung aus sehr wenig Teilen besteht, was eine hohe Robustheit und damit eine geringe Fehleranfälligkeit und zudem geringe Stückkosten zur Folge hat.

Die Verschließeinrichtung ist einfach aufgebaut und besitzt daher einen geringen Platzbedarf und ist in der Herstellung unaufwändig und preiswert.

Vorteilhafterweise besitzt diese Verschließeinrichtung also eine besonders einfache und robuste und zudem platzsparende Bauform für eine zudem komfortabel zu bedienenden Verschließeinrichtung für eine elektrische Ladedose, die vergleichsweise wenig Bauteile benötigt. Die komfortable Bedienung ermöglicht es weiterhin, den Verschluss mit geringem Aufwand beim Einführen eines Ladesteckers, beispielswiese eines Autoladesteckers, mittels des Ladesteckers zusammen mit dem Steckvorgang in einem einzigen Bewegungsablauf zu betätigen.

Wie bereits angedeutet, ist es weiterhin von besonderem Vorteil, dass die Verschließeinrichtung optional an dem Wallbox-Gehäuse der Wallbox montierbar ist und dadurch ggf. zum Bestandteil der Wallbox wird, beispielsweise im Austausch gegen eine einfache Verschlussklappe. Insbesondere kann die Wallbox dazu eine Montagevorrichtung besitzen, wodurch vorteilhafterweise eine gewisse Modularität gewährleistet ist.

Für die Montagevorrichtung sind eine Vielzahl von Ausführungen möglich. Die Montagevorrichtung kann z. B. als etwas aufwändigere aber komfortable Rastvorrichtung ausgeführt sein oder es kann sich dabei auch einfach nur um mehrere Schraubdurchlässe o. ä. handeln, die insbesondere wasserdicht ausgeführt sein können und mit entsprechenden Gewindeöffnungen des Rahmenteils der Schließeinrichtung korrespondieren um eine Verschraubung der Verschließeinrichtung an dem Wallbox-Gehäuse zu ermöglichen.

Durch diesen modularen Aufbau können mit nur geringem Aufwand Wallboxen beispielsweise für den Export in die besagten Länder, welche erhöhte Sicherheitsanforderungen, z. B. an die automatische Verschließbarkeit, stellen, umgerüstet werden. Der Aufwand für den Einsatz solcher Wallboxen in Ländern mit solch strengen Sicherheitsvorschriften ist somit erheblich erleichtert.

Vorteilhafterweise kann somit die vorgenannte modulare Nachrüstbarkeit zur Anpassung der Wallbox an Gesetze und Regelungen einzelner Staaten dienen, in denen einschränkendere Vorgaben und Anforderungen an die Funktionsweise von Wallboxen existieren. Weiterhin kann eine solche modulare Nachrüstbarkeit Planungssicherheit für sich künftig möglicherweise verschärfende Gesetzesregelungen auch im Inland bieten.

Vorteilhafterweise verschließen die beiden Blenden in ihrer Ausgangslage die Stecköffnung maximal, d. h. in ihrer Ausgangslage befinden sich die beiden Blenden - bezogen auf ihren Bewegungsspielraum - in derjenigen Position, in der sie die größtmögliche Fläche der Stecköffnung abdecken. Dennoch kenn auch in dieser Position ein Bereich unabgedeckt bleiben, welcher dann in einer vorteilhaften Ausgestaltung vom Schieber verschlossen wird.

Vorteilhafte Ausgestaltungen der Erfindung sind in den Unteransprüchen und der folgenden Beschreibung angegeben.

In einer bevorzugten Weiterbildung kann die Verschließeinrichtung genau zwei Zugfedern besitzen, von denen je eine Zugfeder einerseits an je eine der beiden Blenden und andererseits an das Gehäuse, z. B. an Haltezapfen, welche innenseitig an die Abdeckung und/oder das Rahmenteil des Gehäuses angeformt.sind, angreift. Dann ist jede der beiden Blenden über je eine der beiden Zugfedern federnd mit dem Gehäuse verbunden. Diese Anordnung besitzt den Vorteil, dass eine optimierte Kraftübertragung zwischen der jeweiligen Feder und der jeweiligen Blende ermöglicht ist. Zudem wirkt die Federkraft direkt und dadurch mit keinen oder nur minimalen Reibungsverlusten auf die jeweilige Blende.

In einer anderen bevorzugten Ausführungsform kann die Verschließeinrichtung genau zwei Zugfedern besitzen, von denen je eine Zugfeder an je ein Ende des Schiebers und andererseits an das Gehäuse, z. B. an Haltezapfen, welche innenseitig an die Abdeckung und/oder das Rahmenteil des Gehäuses angeformt sind, angreift. Dann ist der Schieber über die beiden Zugfedern federnd mit dem Gehäuse verbunden. Diese Anordnung besitzt den Vorteil, dass der Schieber besonders stabil und ebenfalls mit einer optimierten Kraftübertragung am Gehäuse gehalten ist. Zudem wirkt die Federkraft direkt auf den Schieber und wirkt weiterhin stabilisierend auf die Gesamtanordnung.

In einer weiteren möglichen Ausgestaltung kann die Verschließeinrichtung nur genau eine Zugfeder besitzen. Diese Zugfeder kann einerseits an den Schieber und andererseits an das Gehäuse angreifen, um über den Schieber Kraft auf die beiden Blenden auszuwirken. Diese Anordnung hat den Vorteil, dass gegenüber der vorgenannten Ausführung ein weiteres Bauteil, nämlich eine der beiden Zugfedern der vorgenannten Ausführung, eingespart wird.

Wie bereits erwähnt, kann die die Betätigungsrichtung des Betätigers in Steckrichtung verlaufen. Dies ist zum einen besonders vorteilhaft, weil dadurch eine intuitive, selbsterklärende Bedienung ermöglicht wird.. Schließlich können dadurch die Entriegelung der Blenden und das Stecken des Ladesteckers in ein- und derselben Bewegungsrichtung vorgenommen werden.

In einer bevorzugten Ausgestaltung kann der Betätiger eine die beiden Blenden verriegelnde Ausgangsposition und eine die beiden Blenden entriegelnde Betätigungsposition besitzen. Zudem kann der Betätiger eine Betätigungsfeder besitzen, mittels derer er federbeaufschlagt betätigbar ist. Dadurch ist der Betätiger federbeaufschlagt aus seiner unbetätigten Position in seine betätige Position überführbar. Durch die Rückstellkraft der Betätigungsfeder kann der Betätiger daraufhin aus seiner betätigten Position automatisch in seine unbetätigte Position zurückgeführt werden. Bei der Betätigungsfeder kann es sich um eine Druckfeder handeln.

Dies ist besonders vorteilhaft, denn es ermöglicht, dass die beiden Blenden, nachdem sie automatisch in ihre Ausgangslage zurückgeführt wurden, automatisch an dem bereits in seiner Ausgangsposition befindlichen Betätiger verrasten. Dazu kann der Betätiger rastseitig eine Angriffsschräge aufweisen, an der die Blenden bei ihrer Rückführung angreifen und ihn geringfügig aus seiner Ausgangsposition bewegen, um daraufhin, insbesondere mit Rastkanten, am Betätiger, insbesondere an Rasthaken des Betätigers, zu verrasten, indem der Betätiger sich durch die Rückstellkraft seiner Betätigungsfeder wieder in seine Ausgangsposition zurückbewegt. Vorteilhafterweise können somit die beiden Blenden bei ihrem rückstellenden automatischen Zusammenbewegen in ihre Ausgangslage automatisch an dem Betätiger verrasten, so dass der gesamte Schließvorgang automatisch - und dadurch ohne die Gefahr eines menschlichen Versagens - durchgeführt wird.

Vorteilhafterweise kann der Schieber an jeder der beiden Blenden senkrecht zur Steckrichtung relativbeweglich zu jeder dieser Blenden gehalten sein. Beispielsweise kann der Schieber zwei Langlöcher, insbesondere zwei Anformungen mit je einem Langloch, besitzen. Jede der beiden Blenden kann dazu jeweils einen Betätigungszapfen besitzen, welcher in das jeweilige Langloch eingreift. Dadurch kommt der entsprechenden Halterung eine Doppelfunktion zu, nämlich zum einen eine betätigende und kraftübertragende Funktion, da der Scheiber sich z. B. nach senkrecht oben bewegt und die beiden Blenden dadurch zur Seite schwenkt. Gleichzeitig ist der Schieber dadurch aber auch an den beiden Blenden gehalten, benötigt also keine weitere bewegungsgestattende Halterung, wodurch die Reibungskräfte minimiert sind. Weiterhin ist dadurch die Bauform vereinfacht. Schließlich ist durch diese Doppelfunktion der Konstruktionsaufwand minimiert.

In einer bevorzugten Weiterbildung verschließen die beiden Blenden in ihrer Ausgangslage die Stecköffnung nur teilweise. Der Schieber besitzt dann einen Abdeckabschnitt, welcher den nicht von den Blenden verschlossenen Bereich der Stecköffnung abdeckt. Der unbetätigte Schieber verschließt die Stecköffnung dann also gemeinsam mit den Blenden in deren Ausgangslage vollständig.

In einer bevorzugten Ausgestaltung können die beiden Blenden an dem Gehäuse, insbesondere zwischen dem Rahmenteil und der Abdeckung insbesondere je an einen innenseitig angeformten Drehzapfen des Rahmenteils und/oder des Abdeckteils, um einen endseitigen Drehpunkt drehbar und damit schwenkbar gehalten sein. Dadurch können die Blenden in Form einer Schwenkbewegung aus ihrer Ausgangslage in ihre die Stecköffnung freigebende Position überführbar sein. Umgekehrt können sie auch aus ihrer die Stecköffnung freigebenden Position in ihre Ausgangslage zurückschwenkbar sein. Dies ermöglicht vorteilhaftwerweise eine Minimierung der Reibungskräfte, welche lediglich im Drehpunkt auftreten. Beispielsweise kann jede der beiden Blenden endseitig eine kreisrunde Durchgangsöffnung besitzen. Das Gehäuse, insbesondere die Abdeckung und/oder das Rahmenteil, kann also die beiden besagten, dazu passenden Drehzapfen besitzen, welche jeweils die Durchgangsöffnungen der Blenden durchgreifen, so dass beide Blenden je um einen der Zapfen schwenkbar an dem Gehäuse gehalten sind.

In einer weiteren vorteilhaften Ausgestaltung können die Blenden je eine nach Innen gerichtete, abgerundete Kontur besitzen, welche im geöffneten Zustand im Wesentlichen der Kontur der Stecköffnung entspricht, so dass dem Ladestecker eine größtmögliche effektive Stecköffnung zur Verfügung gestellt werden kann.

In einer bevorzugten Ausgestaltung können die beiden Blenden zueinander spiegelsymmetrisch sein.

In einer weiteren vorteilhaften Ausgestaltung besitzt jede Blende eine Anschlagkante zum Anschlag an die korrespondierende Anschlagkante der jeweils anderen Blende. Insbesondere kann jede der beiden Blenden kabelanschlussseitig an ihrer Anschlagkante eine Rastanformung, insbesondere in Form eines Raststeges, zur Verrastung am Rasthaken besitzen. In der Ausgangslage der beiden Blenden können die Anschlagkanten beiden Blenden dann gegeneinander anschlagen.

In einer bevorzugten Ausführungsform kann der Schieber an seinem dem Betätiger zugewandten Ende eine Angriffskante, insbesondere eine hervorstehende Angriffsanformung, zur Verschiebung des Schiebers mittels des Ladesteckers besitzen. Dies ist zum einen vorteilhaft, weil dadurch die zwischenzeitige, senkrecht zur Steckrichtung erfolgende Betätigung des Schiebers durch den Ladestecker weitgehend selbsterklärend ist. Zum anderen erleichtert dies auch die Betätigung durch verschiedene ausgeführte Ladestecker, deren Steckbereiche beispielsweise endseitig unterschiedlich, z. B. leicht abgerundet, ausgeführt sein können und durch die besagte Angriffsanformung trotzdem problemlos zur Betätigung des Schiebers geeignet sind.

In einer bevorzugten Ausgestaltung ist die Verschließeinrichtung dazu eingerichtet, mittels des Ladesteckers zunächst ein Betätigen des Betätigers in Steckrichtung als anschließend auch ein Halten des Betätigers in seiner betätigten Position sowie gleichzeitig dazu ein zumindest anfängliches Verschieben des Schiebers senkrecht zur Steckrichtung zur Entriegelung der Blenden zu ermöglichen. Dies kann beispielsweise durch eine geeignete Anordnung des Betätigers relativ zum Schieber geschehen, wobei diesem Abstand beispielsweise eine Normgröße und/oder eine übliche/ konventionelle Bauform eines typischen Autoladesteckers zugrunde liegen kann. Die Verschließeinrichtung muss also dazu eingerichtet sein, es dem Ladestecker, bei dem es sich bevorzugt um einen Autoladestecker handelt, zu ermöglichen, den Betätiger in Steckrichtung gedrückt zu halten und gleichzeitig den Schieber senkrecht dazu so weit zu betätigen, dass die beiden Blenden sich weit genug auseinander bewegen, um vom anschließend zurückschnellenden Betätiger zunächst nicht erneut verriegelt zu werden. Dies wird insbesondere durch die Anordnung des Betätigers und des Schiebers erreicht. Beide müssen im verschließenden Zustand nah genug beieinander angeordnet sein, um gleichzeitig vom Ladestecker, insbesondere von Autoladestecker, betätigt werden zu können. Weiterhin sollte sich der Schieber dazu bei seiner öffnenden Betätigung vom Betätiger wegbewegen.

Bei weiterer Betätigung des Schiebers durch den Ladestecker - senkrecht zur Steckrichtung und weg von dem Betätiger - schnappt der Betätiger durch die Rückstellkraft seiner Betätigungsfeder zurück ohne die Blenden zu verrasten, da diese sich zu diesem Zeitpunkt bereits aus der Reichweite des Betätigers entfernt haben. Die Blenden bewegen sich daraufhin durch die weitere Betätigung des Schiebers in ihre geöffnete Position und der Ladestecker kann teilweise durch die Stecköffnung geführt und mit der Ladedose gesteckt werden.

Vorteilhafterweise ist der Bewegungsablauf in der Praxis allerdings noch intuitiver und leichter verständlich, als es die vorstehende Formulierung suggeriert. Mit einfacheren Worten gesagt, stellt sich das "Handling" aus Sicht des Benutzers vereinfacht etwa folgendermaßen dar:
Der Ladestecker wird zur Entriegelung leicht unterhalb der Stecköffnung in Steckrichtung auf die Verschließeinrichtung zu bewegt. Sobald er den dort angeordneten Betätiger vollständig betätigt hat, stößt er gegen das Gehäuse, nämlich gegen die Abdeckung des Gehäuses. Die Abdeckung kann an dieser Stelle zur Verbesserung der intuitiven Bedienung bevorzugt eine steckseitige Kontur besitzen, welche den Ladestecker daraufhin etwas "nach oben", also in Richtung der Stecköffnung umlenkt. Dies verbessert zumindest die intuitive, selbsterklärende Bedienung. Der Ladestecker hält dabei den Betätiger zu diesem Zeitpunkt jedoch zunächst noch gedrückt, beginnt aber bereits, gegen die untere Kante des Schiebers anzustoßen und den Schieber bei gedrückt gehaltenem Betätiger etwas nach oben zu verschieben. Dadurch bewegen sich die beiden Blenden bereits etwas auseinander. Nachdem die beiden Blenden die Reichweite des Betätigers verlassen haben, verliert der Betätiger den Kontakt mit dem Ladestecker und schnellt zurück. Dabei kann der Betätiger die beiden Blenden jedoch nicht mehr verriegeln, da sie sich bereits außerhalb seiner Reichweite befinden. Die Blenden werden durch weiteres Betätigen des Schiebers in ihre öffnende Position gebracht und geben die Stecköffnung frei.

Nun kann der Ladestecker mit der Ladedose gesteckt werden.

Bei gesteckten Ladestecker werden die beiden Blenden durch den sich in der Stecköffnung befindlichen Steckverbinder mittels des vom Steckverbinder gehaltenen Schiebers an einer rückstellenden Bewegung gehindert.

Nach erfolgtem Ladevorgang kann der Ladestecker wieder von der Ladedose getrennt und durch die Stecköffnung wieder aus der Verschließeinrichtung herausgezogen werden. Daraufhin bewegen sich die beiden Blenden, wie oben bereits geschildert, automatisch in ihre Ausgangslage zurück und verrasten dort erneut am Betätiger.

### Ausführungsbeispiel

Ein Ausführungsbeispiel der Erfindung ist in den Zeichnungen dargestellt und wird im Folgenden näher erläutert. Es zeigen:
- Fig.1a,: b eine Verschließvorrichtung mit einem Autoladestecker aus schräger kabelanschlussseitiger Perspektive sowie aus schräger steckseitiger Perspektive;
- Fig.2a, b: die Verschließeinrichtung aus steckseitiger Sich im verschlossenen und im geöffneten Zustand;
- Fig.3a - f: einen 6-phasigen Bewegungsablauf des Steckverbinders relativ zur dadurch betätigten Verschließeinrichtung;
- Fig.4a, b: die Verschließeinrichtung in einer Explosionsdarstellung aus schräger steckseitiger und kabelanschlussseitiger Ansicht;
- Fig.5a,: b eine Abdeckung aus steckseitiger und aus anschlussseitiger Ansicht;
- Fig.6a, b: eine Blende aus steckseitiger und aus anschlussseitiger Ansicht;
- Fig.6c: zwei an der Abdeckung schwenkbar gehaltenen Blenden;
- Fig.7a, b: einen Betätiger aus zwei verschiedenen Ansichten;
- Fig.7c: eine Druckfeder;
- Fig.7d: die Abdeckung mit dem Betätiger mit aufgesteckter Druckfeder und Blenden im montierten Zustand;
- Fig.8a, b: einen Schieber aus steckseitiger und kabelanschlussseitiger Sicht;
- Fig.8c: eine Zugfeder;
- Fig.8d: die Abdeckung mit dem an den Blenden im montierten Zustand beweglich gehaltenen und über zwei Druckfedern mit der Abdeckung verbundenen Schieber;
- Fig.9a, b: ein Rahmenteil aus steckseitiger und aus anschlussseitiger Ansicht;
- Fig.9c: eine Verschließeinrichtung aus kabelanschlussseitiger Ansicht mit Blick auf das Rahmenteil
- Fig.9d: die Verschließeinrichtung aus steckseitiger Ansicht mit Blick auf die Abdeckung;
- Fig.10: die Verschließeinrichtung mit kabelanschlussseitig angeordneter Ladebuchse;
- Fig.11a, b: eine alternative Verschließeinrichtung mit einem Klappdeckel in geschlossenem und leicht geöffnetem Zustand;
- Fig.12: die Verschließeinrichtung aus steckseitiger Ansicht, aufweisend eine Leuchtanzeige.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein. Richtungsangaben wie beispielsweise "links", "rechts", "oben" und "unten" sind mit Bezug auf die jeweilige Figur zu verstehen und können in den einzelnen Darstellungen gegenüber dem dargestellten Objekt variieren.

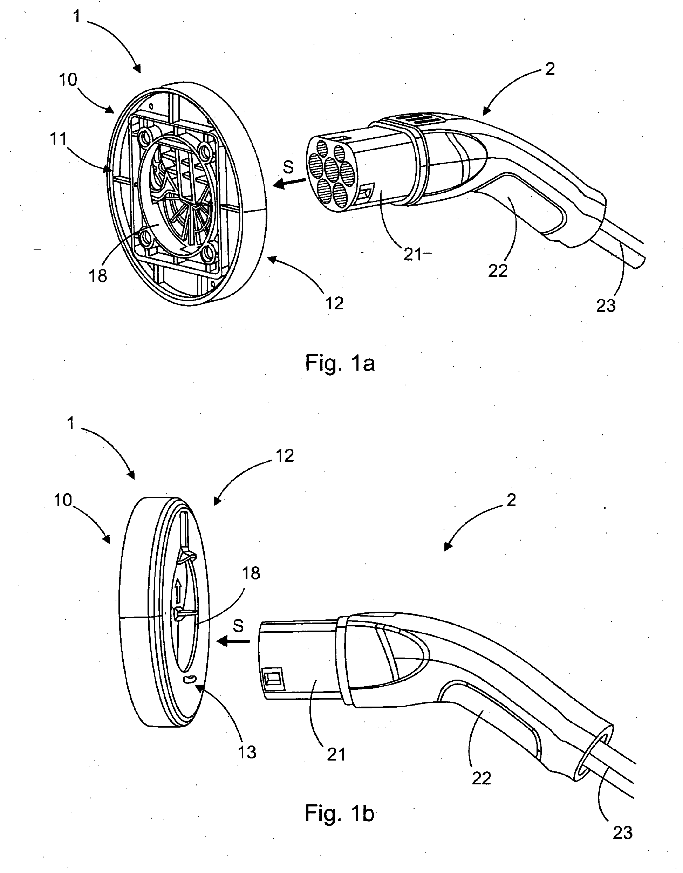

Die Fig.1a zeigt eine Verschließeinrichtung 1 aus kabelanschlussseitigem schrägen Blickwinkel mit einem steckseitig davor angeordneten Ladestecker, der als Autoladestecker 2 ausgeführt ist. Die Verschließeinrichtung 1 besitzt ein Gehäuse 10, das eine Stecköffnung 18 aufweist. Das Gehäuse 10 besitzt zwei Gehäuseteile, nämlich ein Rahmenteil 11 sowie eine Abdeckung 12.

Die Fig.1b zeigt dieselbe Anordnung aus steckseitiger, schräger Perspektive. Aus dieser Darstellung wird um so deutlicher, dass der Ladestecker 2 in der Zeichnung etwas tiefer angeordnet ist als die Stecköffnung 18 der Verschließeinrichtung 1, d. h. die untere Kante seines Steckbereichs 21 ist in der Zeichnung tiefer angeordnet als die tiefste Stelle der Stecköffnung 18, wobei die Steckrichtung in der Zeichnung horizontal verläuft. Dadurch kann der Ladestecker 2 bei Bewegung in Steckrichtung auf die Verriegelungseinrichtung 1 zu mit seinem Steckbereich 21 zunächst den in dieser Darstellung noch unbetätigten Betätiger 13 betätigen. Dabei kann der Ladestecker 2 händisch an einem gegenüber dem Steckbereich leicht abgewinkelten Griff 22 gehalten und geführt werden. An den Ladestecker 2 ist ein Ladekabel 23 angeschlossen, das seinerseits - üblicherweise über einen weiteren nicht gezeigten Steckanschluss - an eine ebenfalls nicht gezeigte zu ladende Batterie - nämlich an eine aufladbare Batterie ("Akku") eines Elektroautos - angeschlossen ist.

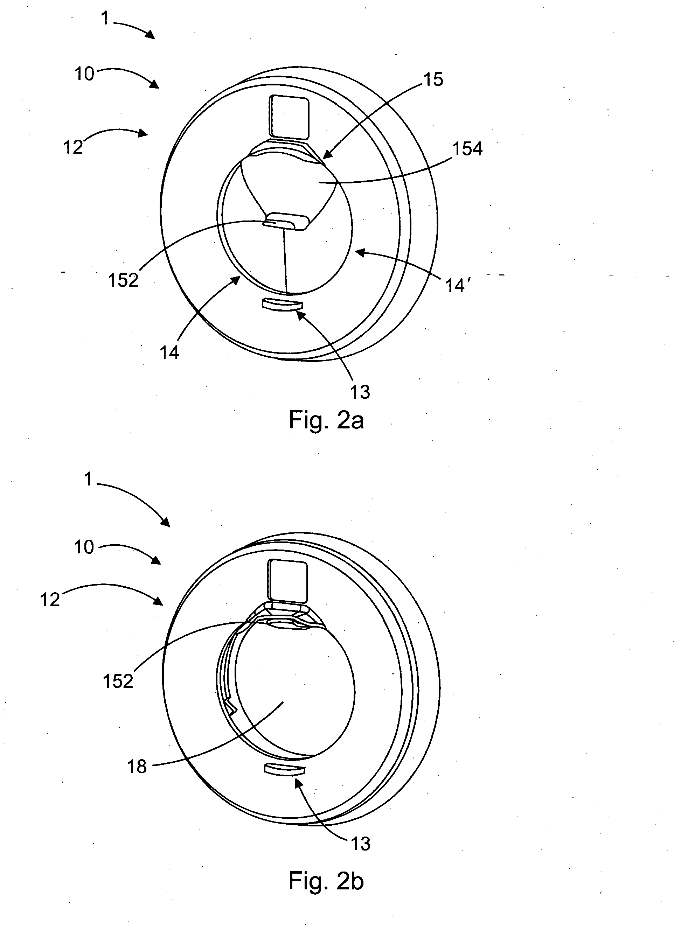

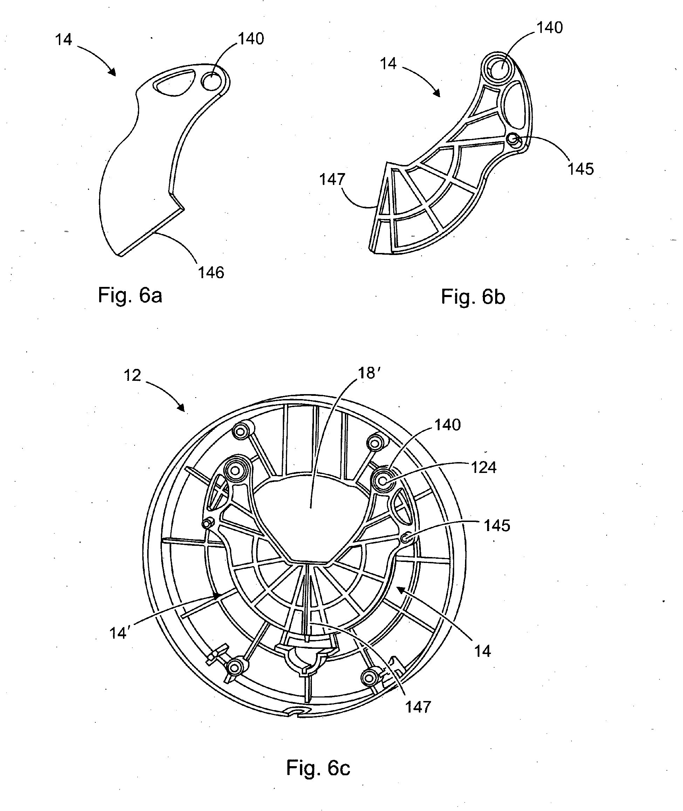

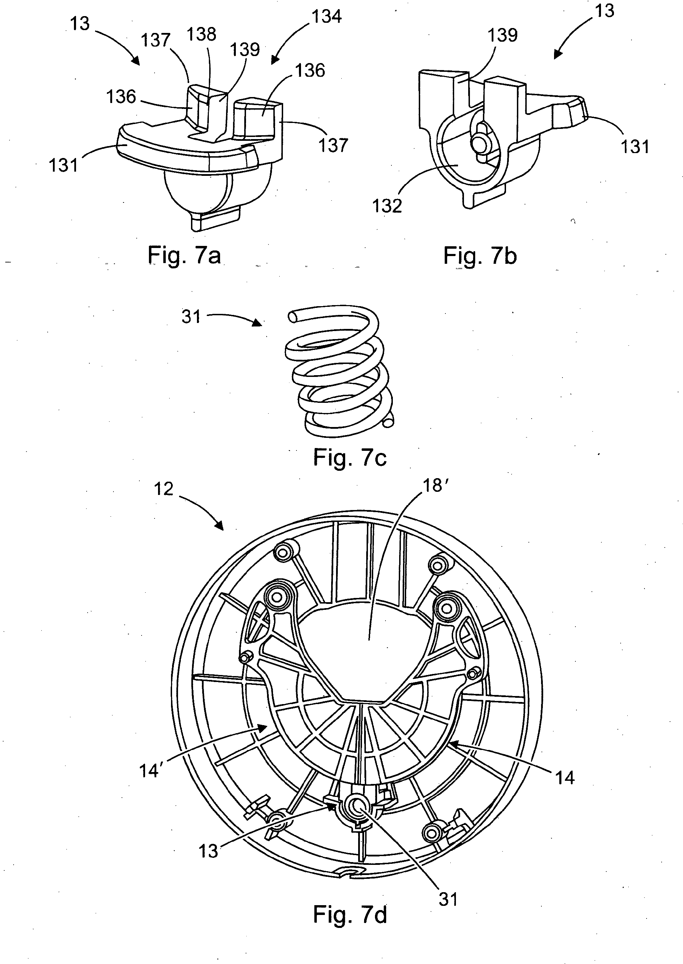

Die Fig.2a zeigt die Verschließeinrichtung 1 aus steckseitiger Sicht in geschlossenem Zustand mit Blick auf die beiden Blenden 14, 14' die sich in ihrer Ausgangslage befinden. In dieser Ausgangslage verschließen die beiden Blenden die Stecköffnung jedoch nur teilweise, wie insbesondere in den Fig.6c und 7c besonders gut zu sehen ist.

Unterhalb der Stecköffnung 18 ist der Betätiger 13 in seiner Ausgangsposition dargestellt, in der er die beiden Blenden 14, 14' rückwärtig, d. h. kabelanschlussseitig, verriegelt.

Zudem ist ein Schieber 15 zu sehen. Der Schieber 15 dient zum einen dazu, die Blenden 14, 14' auseinander zu bewegen. Zum anderen besitzt der Schieber 15 einen Abdeckabschnitt 154, der zum Abdecken eines Bereichs der Stecköffnung 18 vorgesehen ist, welcher von den beiden Blenden 14 in deren Ausgangslage nicht abgedeckt wird. Am unteren Rand des Abdeckabschnitts besitzt der Betätiger 15 eine Angriffsanformung 152 zu seiner Betätigung durch den Ladestecker 2.

In der Fig.2b ist die Verschließeinrichtung 1 in geöffnetem Zustand gezeigt, d. h. die beiden Blenden 14, 14' sind hier mittels des Schiebers 15 in ihre geöffnete Position geschwenkt worden und sind daher aus dieser steckseitigen Ansicht nicht mehr zu sehen. Vom Schieber 15 ist nur noch die Angriffsanformung 152 zu sehen, denn er ist ebenfalls aus der Stecköffnung 18 heraus, nämlich nach oben, geschoben und gibt seinerseits einen Bereich der Stecköffnung 18 frei. Der Betätiger 13 befindet sich wieder in seiner Ausgangsposition.

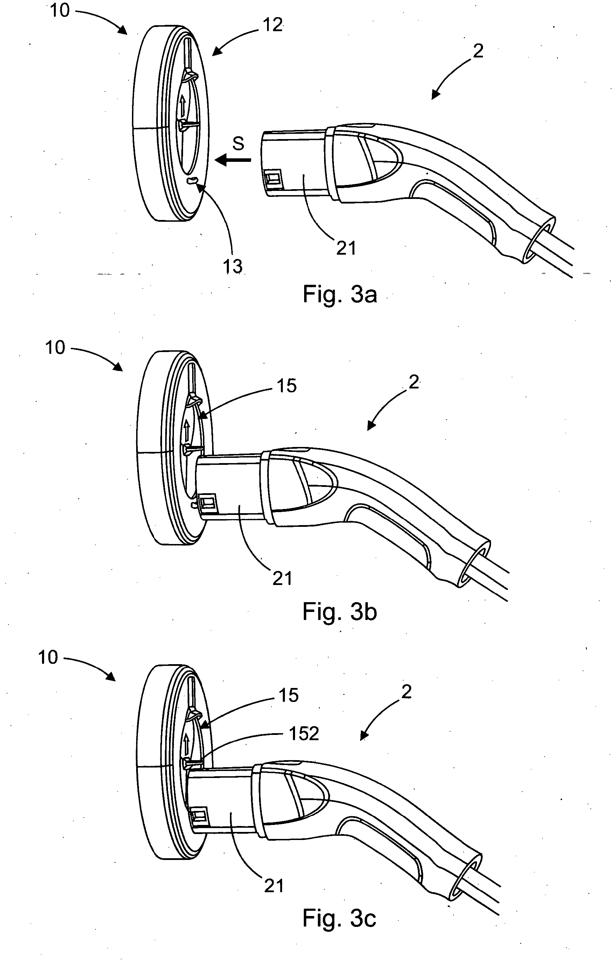

Die Fig.3a-f zeigt in sechs Darstellungen unterschiedliche Phasen der Betätigung der Verschließeinrichtung 1.

Die Fig.3a entspricht der bereits diskutierten Fig.1b. und ist nur der Vollständigkeit des Ablaufs wegen aufgeführt.

In der Fig.3b ist der Ladestecker 2 mit seinem Steckbereich 21 an den Betätiger 13 der Verschließeinrichtung 1 herangeführt. Der Betätiger 13 ist aus Übersichtlichkeitsgründen in dieser Darstellung nicht bezeichnet.

In der Fig.3c ist gezeigt, wie der Betätiger 13 mittels des Ladesteckers 2, nämlich mit dessen Steckbereich 21, mittels einer Druckfeder 31 (die Druckfeder 31 ist hier nicht zu sehen) federbeaufschlagt betätigt wurde. Der betätigte Betätiger 13 entriegelt rückwärtig (dieser Entriegelungsvorgang ist hier nicht zu sehen) die beiden Blenden 14, 14'.

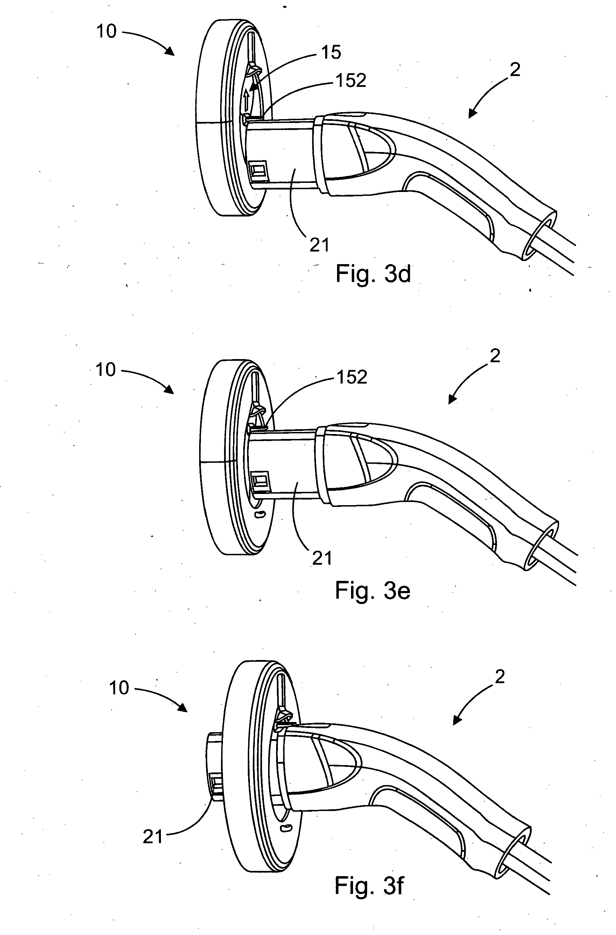

In der Fig.3d ist der Ladestecker 2 gegenüber der vorangegangenen Darstellung nach oben - d. h. in Richtung des Schiebers - 15 geführt, so dass er an die Angriffsanformung 152 des Schiebers 15 von unten anschlägt.

In der Fig.3e ist der Schieber 15 bereits, mit zwei Zugfedern 32 (die Zugfedern 32 sind hier nicht sichtbar) federbeaufschlagt ein Stück weit nach oben geschoben. Die beiden Blenden 14, 14' haben sich dabei zumindest soweit geöffnet, d. h. sie sind gegenüber ihrer Ausgangslage so weit verschwenkt, dass sie sich aus der Reichweite des Betätigers 13 entfernt haben. Gleichzeitig ist der Betätiger 13 in seine Ausgangslage zurückgeschnellt, ohne die beiden Blenden 14, 14' dabei zu verriegeln.

In der Fig.3f ist die Stecköffnung 10 durch Aufschwenken der beiden Blenden 14, 14' freigegeben und der Ladestecker 2 ist teilweise, nämlich mit seinem Steckbereich 21 hinein- bzw. zum Teil durch die Stecköffnung 10 hindurchgesteckt. In dieser Position kann er mit einer kabelanschlussseitig der Verriegelungseinrichtung angerordneten Ladebuchse 3 steckend verbunden werden. Dabei bleibt der Schieber 13 durch den Ladestecker 2 in seiner öffnenden Position gehalten und die Blenden 12 bleiben ebenfalls in ihrer geöffneten Position gehalten.

Durch ein Herausziehen des Ladesteckers 2 aus der Stecköffnung 10 wird die Verschließeinrichtung 1 automatisch in einen Zustand überführt, wie er bereits in der Fig.3a dargestellt ist. Der Schieber 13 und die Blenden 12 sind durch die Federkraft der Zugfedern 32 in ihre Ausgangslagen zurückgeführt. Die Blenden 12 sind nun wieder am Betätiger 13 verrastet.

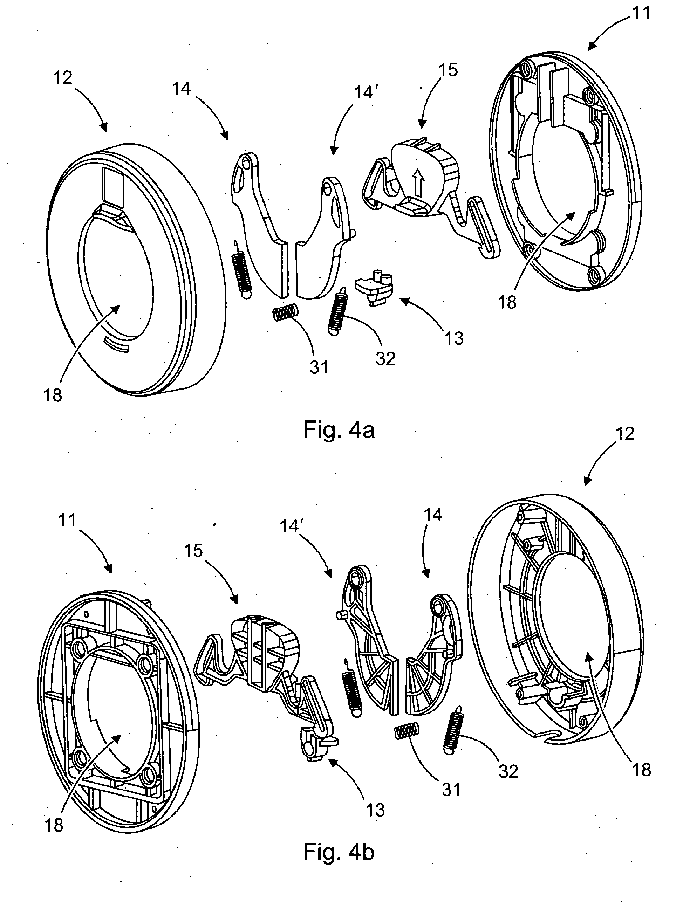

Die Fig.4a und 4b zeigen die Verschließeinrichtung 1 in einer Explosionsdarstellung auch steckseitiger bzw. kabelanschlussseitiger Sicht.

Zwischen dem Rahmenteil 11 und der Abdeckung 12, welche gemeinsam das Gehäuse 100 bilden, befinden sich eine als Druckfeder ausgeführte Betätigungsfeder 31, zwei Zugfedern 32, ein Betätiger 13, zwei Blenden 14, 14' sowie ein Schieber 15. Diese Bauteile sind zur Herstellung der Verschließeinrichtung ausreichend.

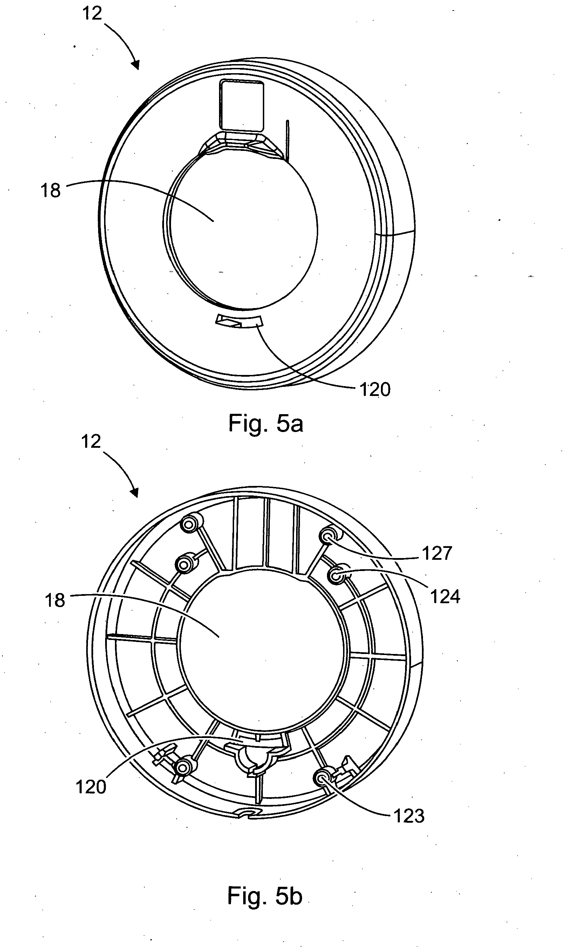

Die Fig.5a und 5b zeigen die Abdeckung 12 aus steckseitiger und Kabelanschlussseitiger Richtung. Unterhalb der Stecköffnung 18 ist eine Betätigungsöffnung 120 für den Betätiger 13 gezeigt.

Innenseitig besitzt die Abdeckung vier Schraubzapfen 127, d. h. Zylinderförmige Anformungen mit je einem Schraubdurchlass zur Verschraubung an dem Rahmenteil 11.

Des Weiteren sind in der Zeichnung oben zwei Drehzapfen 124 zur schwenkbaren Aufhängung der beiden Blenden innenseitig an die Abdeckung 12 angeformt. Unten dargestellt sind zwei innenseitig an die Abdeckung 12 angeformte Angriffszapfen 123, die dem gehäuseseitigen, einseitigen Befestigen der jeweiligen Zugfeder 32 dienen.

Die Fig.6a und 6b zeigen exemplarisch eine Blende 14 aus steckseitiger und aus anschlussseitiger Ansicht. Die andere Blende 14' ist hier nicht gezeigt. Sie ist dazu spiegelsymmetrisch ausgeführt

Die Blende 14 besitzt eine endseitige kreisrunde Durchgangsöffnung 140 zur schwenkbaren Aufhängung an einem der vorgenannten Drehzapfen 124. Zudem besitzt die Blende 14 einen Haltezapfen 145 zum beweglichen Halten des Schiebers 15 an einer zum Schieber gehörenden Führungsnut 150. Zudem besitzt die Blende 14 eine Anschlagkante 146 zum Anschlag an die korrespondierende Anschlagkante der anderen Blende 14'. Kabelanschlussseitig besitzt die Blende an ihrer Anschlagkante 146 eine Rastanformung in Form eines Raststeges 147.

Die Fig.6c zeigt die beiden an der Abdeckung 12 schwenkbar gehaltenen Blenden 14 in ihrer Ausgangslage. Oberhalb der Blenden 14, 14' ist in dieser Darstellung existiert noch ein freier Bereich 18' der Stecköffnung 18. Dieser freie Bereich 18' ist dafür vorgesehen, von dem Schieber 15 abgedeckt zu werden. Die beiden Blenden 14 sind mit ihrer jeweiligen Durchgangsöffnung 140 an dem jeweiligen Drehzapfen 124 schwenkbar aufgehängt.

Die Fig.7a und 7b zeigen einen Betätiger 13 aus steckseitiger sowie aus anschlussseitiger Ansicht. Der Betätiger besitzt einen Betätigungsabschnitt 131 zur Betätigung durch den Ladestecker 2 sowie einen Rastbereich 134 zur Verrastung der beiden Blenden 14. Außerdem besitzt er einen Federaufnahmeabschnitt 132 zur Aufnahme der als Druckfeder ausgeführten Betätigungsfeder 31.

Der Rastbereich 134 besitzt zwei Rastzapfen 137 mit je einer äußeren Aufgleitschräge 136 sowie je einer Rastkante 138 mit einem spitzwinklig von der Aufgleitschrägen 136 verlaufenden Hinterschnitt 139 zum Verrasten hinter dem Raststeg 147. Die Aufgleitschrägen 136 dienen dazu, dass der Betätiger 13 automatisch von den ihrerseits automatisch zurückfedernden Blenden 14 entgegen der Federkraft seiner Betätigungsfeder 31 kurzzeitig aus seiner Ausgangslage bewegt wird und die zurückgeführten Blenden 14, 14' mit ihren Raststegen 147 automatisch hinter den Rastzapfen 137 des daraufhin zurückfedernden Betätigers 13 verrasten.

Die Betätigungsfeder 32 ist in Fig.7c dargestellt. Diese Darstellung ist für den Fachmann selbsterklärend. Es handelt sich um eine vergleichsweise kurze Schraubenfeder, welche in ihrer Ruhelage komprimierbar ist.

Die Fig.7c zeigt die Anordnung aus der bereits beschriebenen Fig.6c, wobei zusätzlich der mit der Betätigungsfeder 31 bestückte Betätiger 13 in die Betätigungsöffnung 130 mit seinem Betätigungsabschnitt 131 aufgenommen ist.

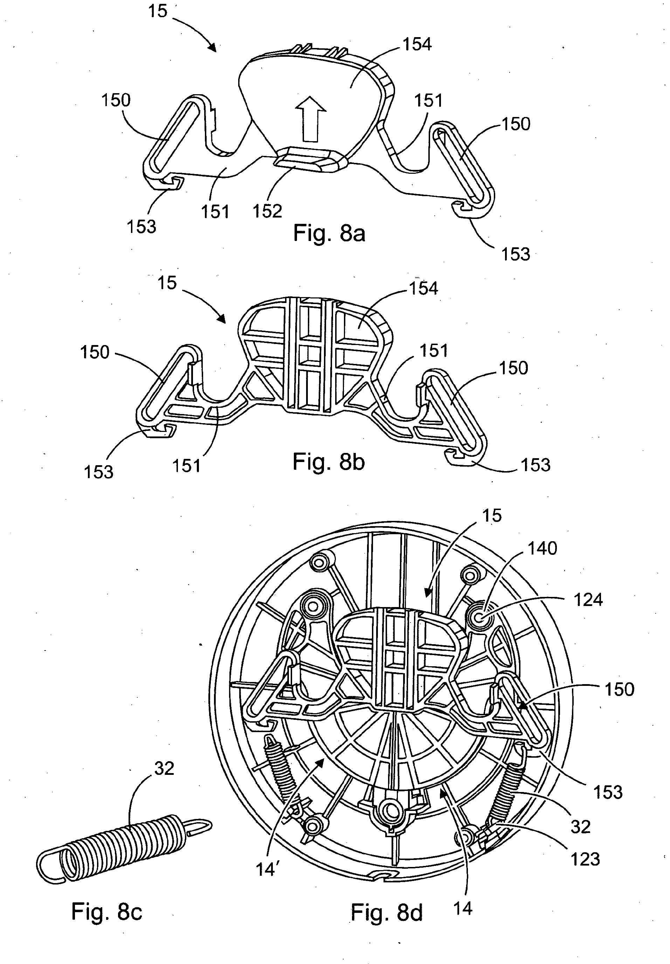

Die Fig.8a und 8b zeigen den Schieber 15 aus steckseitiger sowie anschlussseitiger Ansicht.

Der Schieber 15 besitzt den Abdeckabschnitt 154, der zum Abdecken des oben genannten freien Bereichs 18' der Stecköffnung 18 vorgesehen ist, welcher von den beiden Blenden 14 auch in deren Ausgangslage nicht abgedeckt werden kann.

Der Schieber 15 besitzt weiterhin zwei einander gegenüber liegend am Abdeckabschnitt angeordnete Haltearme 151, an deren Enden jeweils eine Führungsnut 150 sowie ein unterhalb der Führungsnut 150 dargestellter Befestigungshaken 153 als Angriff für die jeweilige Angriffsöse 323 der jeweiligen Zugfeder 32 dargestellt ist.

Die Fig.8c zeigt die Zugfeder 32 mit ihren beiden endseitigen Ösen 323.

Die Fig.8d zeigt die Abdeckung 12 mit dem an den Blenden 14 im montierten Zustand beweglich gehaltenen und über zwei Druckfedern 31 mit der Abdeckung 12 verbundenen Schieber 15. Aus dieser Darstellung wird dem Fachmann spätestens klar, dass der der Schieber 15 bei seiner in der Zeichnung nach oben gerichteten Bewegung in der Lage ist, die beiden mit ihrer jeweiligen Durchgangsöffnung 140 an dem jeweiligen Drehzapfen 124 schwenkbar aufgehängten Blenden 14 in deren vom Betätiger 13 entriegelten Zustand aufzuschwenken. Gleichzeitig gibt auch der Abdeckabschnitt 154 des Schiebers 15 durch diese öffnende Bewegung die Stecköffnung 18 frei (vgl. Fig.2a, 2b).

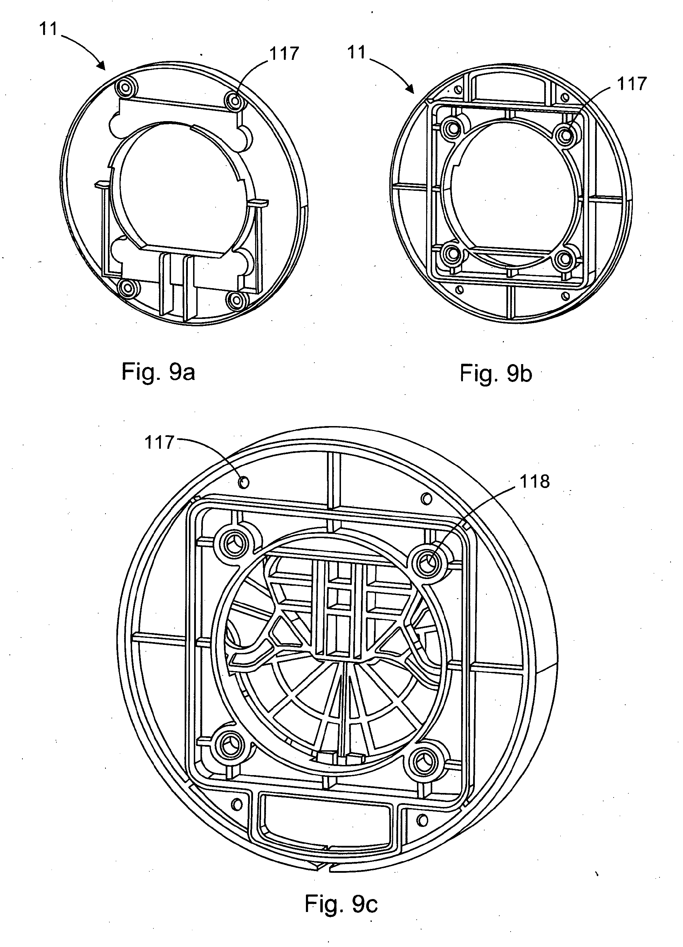

Die Fig.9a und 9b zeigen das Rahmenteil 11 aus steckseitiger und aus anschlussseitiger Ansicht. Das Rahmenteil 11 besitzt einen Satz Befestigungsöffnungen 117, welche zur Verschraubung mit den Schraubzapfen 127 der Abdeckung 12 dienen. Zudem besitzt das Rahmenteil einen Satz Montageöffnungen 118 welche zur besseren Abdichtung nicht durchgehend ausgeführt sind. In diese Montageöffnungen 118 können z. B. Gewindeeinsätze mit Innengewinden eingesetzt sein, so dass es sich dann um Gewindeöffnungen handelt. Dadurch kann die Verschließeinrichtung 1 an einem Wallbox-Gehäuse durch Verschrauben montiert werden. Auch andere Befestigungsmethoden, z. B. die Verwendung gewindefreier Einsätze in Verbindung mit Rastzapfen des Wallbox-Gehäuses sind möglich.

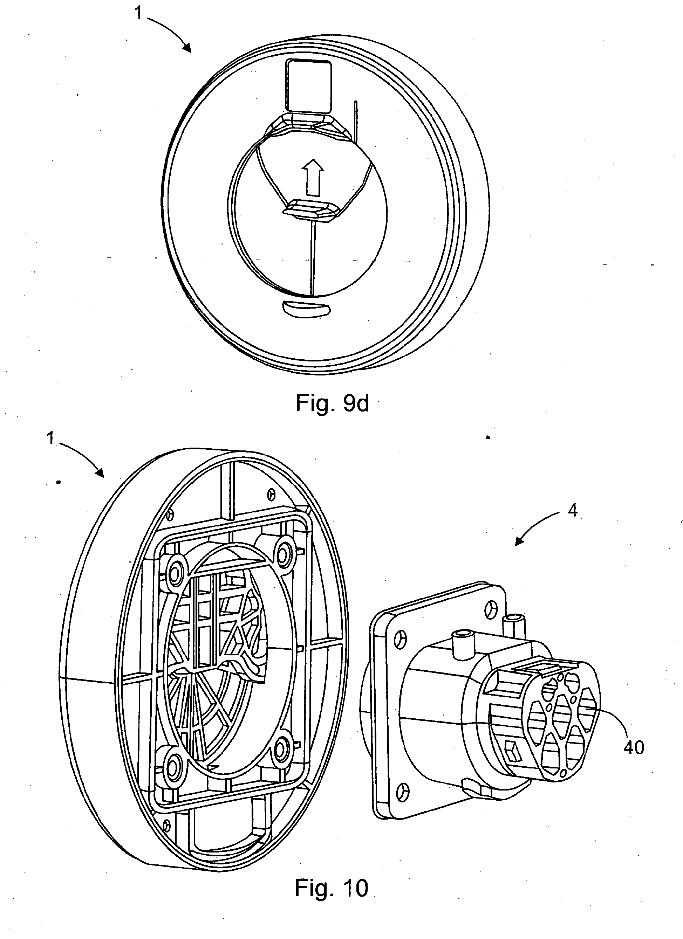

Die Fig.9d zeigt die vorangegangene Anordnung, nämlich die Verschließeinrichtung 1 in geschlossenem Zustand der Vollständigkeit wegen noch einmal von vorne, entspricht aber der Darstellung in der Fig.2a.

Die Fig.10 zeigt die Verschließeinrichtung aus schräg kabelanschlussseitiger Sicht, nämlich mit Blick auf ihr Rahmenteil 11. Kabelanschlussseitig der Verschließeinrichtung ist eine Ladebuchse 4 mit Blick auf ihre Kabeleinlassöffnungen 40 gezeigt. Der Steckbereich 31 der Ladebuchse ist zur Stecköffnung 18 der Verschließeinrichtung 1 gerichtet. In dieser Orientierung können die Ladebuchse 3 und die Verschließeinrichtung an dem nicht gezeigten Wallbox-gehäuse moniert werden und damit Bestandteil der Wallbox sein.

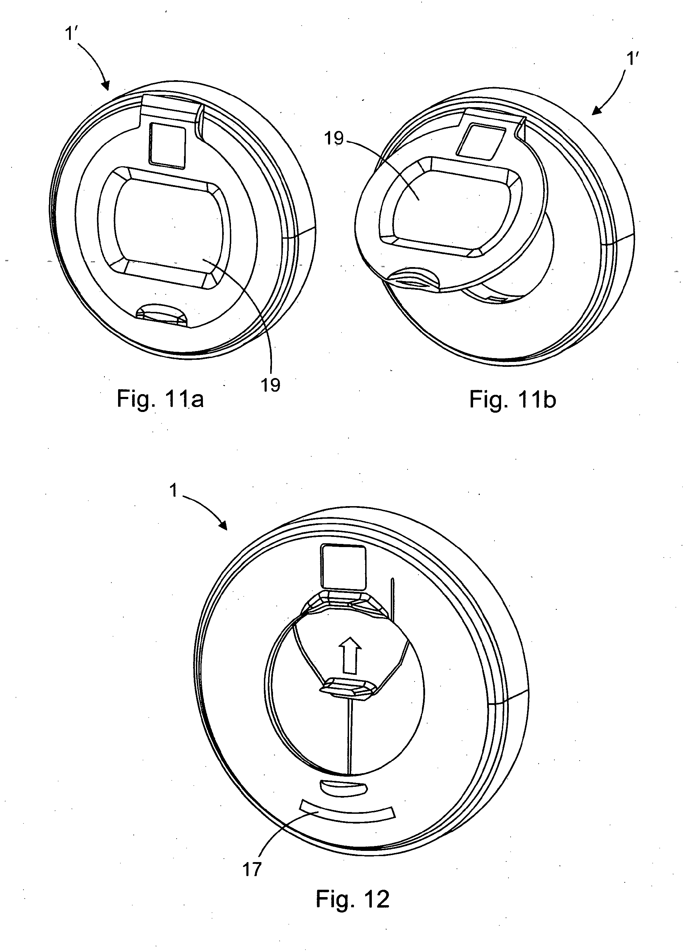

Die Fig.11a und 11b zeigen eine alternative Verschließeinrichtung 1', die lediglich das Gehäuse oder ein vereinfachtes, alternatives Gehäuse 10 sowie eine daran angebrachte einfache Verschlussklappe 19 zum Verschließen der Stecköffnung 18 besitzt.

Im Zusammenhang mit der Erfindung ist offenbart, dass die Verschließeinrichtung 1 und die alternative Verschließeinrichtung 1' gemeinsam mit der Wallbox, aufweisend ein Wallbox-Gehäuse und die Ladedose, ein System bilden können. Das Wallbox-Gehäuse besitzt eine Montagevorrichtung, an der sowohl die Verschließeinrichtung als auch die alternative Verschließeinrichtung 1' montierbar sind. Dann kann entsprechend der rechtlichen Vorgaben entweder die Verschließeinrichtung 1 oder die alternative Verschließeinrichtung 1'.

Die Fig.12 zeigt schließlich die Verschließeinrichtung 1 aus steckseitiger Ansicht, wobei die Verschließeinrichtung 1 eine Leuchtanzeige 17 besitzt. Dazu ist unterhalb des Betätigers 13 ein durchsichtiger Kunststoffeinsatz in die Abdeckung eingebracht. Im Gehäuse 10 ist an dieser Stelle eine Leucht-LED angeordnet. Diese dient dazu, die Verschließeinrichtung 1' steckseitig zu beleuchten und dadurch die Bedienung bei schlechten Lichtverhältnissen zu erleichtern.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1, 1': Verschließeinrichtung, alternative Verschließeinrichtung
- 10: Gehäuse
- 11: Rahmenteil
- 117: Befestigungsöffnungen
- 118: Montageöffnungen

- 12: Abdeckung
- 120: Betätigungsöffnung
- 123: Angriffszapfen
- 124: Drehzapfen
- 127: Schraubzapfen

- 13: Betätiger
- 131: Betätigungsabschnitt
- 134: Rastbereich
- 136: Aufgleitschräge
- 137: Rastzapfen
- 138: Rastkante
- 139: Hinterschnitt

- 14,14': Blenden
- 140: Durchgangsöffnung
- 145: Haltezapfen
- 146: Anschlagkante
- 147: Raststeg

- 15: Schieber
- 150: Führungsnut
- 151: Haltearme
- 152: Angriffsanformung
- 153: Befestigungshaken
- 154: Abdeckabschnitt

- 17: Leuchtanzeige

- 18: Stecköffnung
- 18': freier Bereich der Stecköffnung

- 19: Verschlussklappe

- 2: Ladestecker, Autoladestecker
- 21: Steckbereich
- 22: Griff
- 23: Kabel

- 31: Druckfeder
- 32: Zugfedern

- 4: Ladedose
- 40: Kabeleinlassöffnungen

- S: Steckrichtung

## Patentansprüche

1. Verschließeinrichtung (1) für eine elektrische Ladedose (4), wobei die Verschließeinrichtung (1) die folgenden Bauteile aufweist:
- ein zumindest zweiteiliges Gehäuse (10), aufweisend ein anschlussseitiges Rahmenteil (11) und eine steckseitige Abdeckung (12) sowie eine durch das Rahmenteil (11) und die Abdeckung (12) verlaufende Stecköffnung (18) zum teilweisen Hindurchstecken eines Ladesteckers (2) in einer Steckrichtung (S) zum steckenden Verbinden des Ladesteckers (2) mit der Ladedose (4);
- genau zwei zwischen dem Rahmenteil (11) und der Abdeckung (12) senkrecht zur Steckrichtung (S) beweglich gehaltene Blenden (14, 14') zur Freigabe und zum zumindest teilweisen Verschließen der Stecköffnung (18);
- genau einen Schieber (15) zum federbeaufschlagten Auseinanderbewegen der beiden Blenden (14, 14') aus ihrer Ausgangslage, in der sie die Stecköffnung (18) zumindest teilweise verschließen, in ihre geöffnete Position, in der sie die Stecköffnung (18) freigeben;
- ein oder mehrere Zugfedern (32), durch welche die Verschließeinrichtung (1) zur vorgenannten Federbeaufschlagung und damit zur Erzeugung einer Rückstellkraft zum automatischen rückstellenden Zusammenbewegen der beiden Blenden (14, 14') in ihre Ausgangslage eingerichtet ist;
- einen mittels des Ladesteckers (2) im Steckvorgang in einer Betätigungsrichtung betätigbaren Betätiger (13) zum Ver- und Entriegeln der beiden Blenden (14, 14') in ihrer Ausgangslage.

2. Verschließeinrichtung (1) gemäß Anspruch 1, wobei die Verschließeinrichtung (1) zwei Zugfedern (32) besitzt.

3. Verschließeinrichtung (1) gemäß Anspruch 2, wobei je eine Zugfeder (32) einerseits an je eine der beiden Blenden (14, 14') und andererseits an dem Gehäuse (10) angreift, so dass jede der beiden Blenden (14, 14') über je eine der beiden Zugfedern (32) federnd mit dem Gehäuse (10) verbunden ist.

4. Verschließeinrichtung (1) gemäß Anspruch 2, wobei je eine Zugfeder (32) einerseits an je eines zweier Enden des Schiebers (15) und andererseits am Gehäuse (10) angreift, so dass der Schieber (15) über die beiden Zugfedern (32) federnd mit dem Gehäuse (10) verbunden ist.

5. Verschließeinrichtung (1) gemäß Anspruch 1, wobei die Verschließeinrichtung (1) genau eine Zugfeder (32) besitzt, welche einerseits an dem Schieber (15) und andererseits an dem Gehäuse (10) angreift, so dass der Schieber über die Zugfeder (32) federnd mit dem Gehäuse (10) verbunden ist.

6. Verschließeinrichtung (1) gemäß einem der vorstehenden Ansprüche, wobei die Betätigungsrichtung des Betätigers in der Steckrichtung (S) verläuft.

7. Verschließeinrichtung (1) gemäß einem der vorstehenden Ansprüche, wobei der Betätiger (13) eine die beiden Blenden (14, 14') verriegelnde Ausgangsposition und eine die beiden Blenden (14, 14') entriegelnde Betätigungsposition besitzt, wobei der Betätiger (13) weiterhin eine Betätigungsfeder (31) besitzt, mittels derer der Betätiger (13) federbeaufschlagt betätigbar - d. h. aus seiner unbetätigten Position in seine betätige Position überführbar - und durch deren Rückstellkraft der Betätiger (13) daraufhin automatisch aus seiner betätigten Position in seine unbetätigte Position rückführbar ist.

8. Verschließeinrichtung (1) nach einem der vorstehenden Ansprüche, wobei die beiden Blenden (14, 14') bei ihrem automatischen rückstellenden Zusammenbewegen in ihre Ausgangslage automatisch an dem Betätiger (13) verrasten.

9. Verschließeinrichtung (1) gemäß einem der vorstehenden Ansprüche, wobei der Schieber (15) an jeder der beiden Blenden (14, 14') senkrecht zur Steckrichtung (S) relativbeweglich zu jeder dieser Blenden (14, 14') gehalten ist.

10. Verschließeinrichtung (1) gemäß einem der vorstehenden Ansprüche, wobei die beiden Blenden (14, 14') an dem Gehäuse (10) drehbar gehalten sind und in Form einer Schwenkbewegung aus ihrer Ausgangslage in ihre die Stecköffnung (18) freigebende Position sowie auch umgekehrt aus ihrer die Stecköffnung (18) freigebenden Position in ihre Ausgangslage überführbar sind.

11. Verschließeinrichtung (1) gemäß einem der vorstehenden Ansprüche, wobei der Schieber (15) an seinem dem Betätiger (13) zugewandten Ende eine Angriffsanformung (152) zu seiner Verschiebung mittels des Ladesteckers (2) besitzt.

12. Verschließeinrichtung (1) gemäß einem der vorstehenden Ansprüche, wobei der Schieber (15) einen Abdeckabschnitt (54) aufweist, welcher die Stecköffnung (18) gemeinsam mit den Blenden (14, 14') in deren Ausgangslage vollständig verschließt.

13. Verschließeinrichtung (1) gemäß einem der vorstehenden Ansprüche, wobei die Verschließeinrichtung (1) dazu eingerichtet ist, mittels des Ladesteckers (2) zunächst ein Betätigen des Betätigers (13) in Steckrichtung (S) als anschließend auch ein Halten des Betätigers (13) in seiner betätigten Position sowie gleichzeitig ein zumindest anfängliches Verschieben des Schiebers (15) senkrecht zur Steckrichtung (S) zur Entriegelung der Blenden (14, 14') zu ermöglichen.

14. Ladesystem, aufweisend eine elektrische Ladedose sowie eine an dieser Ladedose angeordnete Verschließeinrichtung (1) gemäß einem der vorstehenden Ansprüche, durch deren Stecköffnung (18) ein Ladestecker (2) teilweise hindurchführbar und mit der Ladedose (4) steckbar ist.

15. Stecksystem, aufweisend ein Ladesystem gemäß Anspruch 14 sowie einen Ladestecker (2).

16. Stecksystem gemäß Anspruch 15, wobei es sich bei dem Ladestecker um einen Autoladestecker (2), also einen Ladestecker für Elektroautos, handelt.

17. Wallbox, aufweisend ein Wallbox-Gehäuse sowie eine darin oder daran angeordnete Ladedose (4), wobei das Wallbox-Gehäuse eine Montagevorrichtung besitzt, an welcher wahlweise sowohl eine Verschließeinrichtung (1) gemäß einem der Ansprüche 1 bis 13 als auch eine Verschlussklappe (19) montierbar und gegeneinander austauschbar sind.

18. Wallbox gemäß Anspruch 17, wobei die Verschließeinrichtung (1) an dem Wallbox-Gehäuse mittels der Montageeinrichtung montiert und damit Bestandteil der Wallbox ist.

19. Verfahren zur Betätigung einer Verschließeinrichtung (1) gemäß einem der Ansprüche 1 bis 13, aufweisend die folgenden Schritte,
- Heranführen eines Ladesteckers (2), insbesondere eines Autoladesteckers, in Steckrichtung (S) an die Verschließeinrichtung (1), hinter der - in Steckrichtung (S) betrachtet - eine Ladedose (4) angeordnet ist, und dabei
- federbeaufschlagtes Betätigen des Betätigers (13) in Steckrichtung (S) mittels des Ladesteckers (2);
- Halten des Betätigers (13) in seiner betätigten Position und gleichzeitiges Beginnen mit dem Verschieben des Schiebers (15) mittels des Ladesteckers (2) senkrecht zur Steckrichtung (S), dadurch
- teilweises, bereits federbeaufschlagtes Auseinanderbewegen der beiden Blenden (14, 14') zumindest aus einer Reichweite des Betätigers (13) heraus, so dass die Blenden (14, 14') nicht mehr durch den Betätiger (13) verrastbar sind;
- Zurückschnellen des Betätigers (13) und gleichzeitiges weiteres federbeaufschlagtes Auseinanderbewegen der beiden Blenden (14, 14') in ihre geöffnete Position zur Freigabe der Stecköffnung (18);
- teilweises Hindurchführen des Ladesteckers (2) durch die Stecköffnung (18) und steckendes Verbinden des Ladesteckers (2) mit der Ladedose (4):
- nach erfolgtem Ladevorgang Ziehen des Ladesteckers (2) aus der Ladedose (4) und aus der Stecköffnung (18) und Entfernen des Ladesteckers (2) von der Verschließeinrichtung (1);
- automatisches zumindest teilweises Verschließen der Stecköffnung (18) durch die beiden Blenden (14, 14') mittels der Rückstellkraft der einen oder der mehreren Zugfedern (32);
- Verrasten der Blenden (14, 14') in ihrer zumindest teilweise verschließenden Ausgangslage am Betätiger (13).
